# EUROPEAN PATENT APPLICATION

(11) **EP 4 170 809 A1**
(43) Date of publication of application: **26.04.2023**
(21) Application number: 21834251.7
(22) Date of filing: 28.06.2021
(51) Int. Cl.: H01M 50/494, H01M 50/46, H01M 4/13, H01M 4/66, H01M 10/052, H01M 10/054, H01M 10/058, H01M 10/42

(54) **SECONDARY BATTERY AND TERMINAL**

(30) Priority: 28.06.2020 CN 202010598014
(71) Applicant: Huawei Technologies Co., Ltd., Longgang District, Shenzhen, Guangdong 518129 (CN)
(72) Inventor: LI, Zhengjie, Shenzhen, Guangdong 518129 (CN); DENG, Yaoming, Shenzhen, Guangdong 518129 (CN); ZHANG, Xinzhi, Shenzhen, Guangdong 518129 (CN); GAO, Yunlei, Shenzhen, Guangdong 518129 (CN); YANG, Dongfang, Shenzhen, Guangdong 518129 (CN); HONG, Da, Shenzhen, Guangdong 518129 (CN); XIE, Fengchao, Shenzhen, Guangdong 518129 (CN)
(74) Representative: Grünecker Patent- und Rechtsanwälte PartG mbB
(86) International application number: PCT/CN2021/102850
(87) International publication number: WO 2022/001987

(57) **Abstract**

This application provides a secondary battery, including at least one battery unit assembly. The battery cell assembly includes a positive electrode plate, a negative electrode plate, and a separator disposed between the positive electrode plate and the negative electrode plate, and the positive electrode plate and the negative electrode plate each include a current collector and an active material layer disposed on the current collector. An elongation rate of the separator is greater than 100%, the elongation rate of the separator includes an elongation rate in the length direction and/or an elongation rate in the width direction, a ratio of the elongation rate of the separator to a thickness of the active material layer of the positive electrode plate and/or negative electrode plate is 3.0%/µm to 8.0%/µm, and a ratio of the elongation rate of the separator to an elongation rate of the current collector of the positive electrode plate and/or negative electrode plate is greater than or equal to 60. In this embodiment of this application, the secondary battery may feature high safety while ensuring a high energy density. Embodiments of this application further provide a terminal including the secondary battery.

## Description

This application claims priority to Chinese Patent Application No. 202010598014.3, filed with the China National Intellectual Property Administration on June 28, 2020, and entitled "SECONDARY BATTERY AND TERMINAL", which is incorporated herein by reference in its entirety.

### TECHNICAL FIELD

This application relates to the field of secondary battery technologies, and in particular, to a secondary battery and a terminal.

### BACKGROUND

With development of the Internet and popularity of portable mobile electronic devices, people have increasingly high requirements for capacity endurance and fast charging capability of lithium secondary batteries, and accompanying safety incidents of thermal runaway of batteries are also increasing. Numerous studies have found that an internal short circuit caused by mechanical abuse (for example, nail piercing, bending, or extrusion by a foreign matter) of a secondary battery is one of the main causes of thermal runaway. When the secondary battery is damaged by an external mechanical force, for example, the secondary battery is pierced by a needle-shaped conductor or another foreign matter, current collectors and active material layers are destroyed, and scraps are generated, causing a direct contact short circuit. In addition, the scraps of current collectors and active material will disperse with the piercing object and a piercing opening, thus triggering a more severe internal contact short circuit of positive and negative electrode current collectors and positive and negative active materials, including but not limited to the following four contact modes: (1) contact between a positive electrode current collector (usually an aluminum foil) and a negative electrode current collector (usually a copper foil); (2) contact between a positive electrode current collector (usually an aluminum foil) and a negative electrode active material layer; (3) contact between a positive electrode active material layer and a negative electrode active material layer; and (4) contact between a negative electrode current collector (usually a copper foil) and a positive electrode active material layer. As a short-circuit resistance of the positive electrode current collector (aluminum foil) and the negative electrode active material layer is relatively close to an internal resistance of the battery, a short-circuit point in this case has the highest heat generation power, causing a temperature to rise rapidly. The temperature rise triggers decomposition of an SEI and shrinkage and melting of a separator, causing a highest risk of thermal runaway of the battery. Further, as the secondary battery is usually formed by stacking or winding battery cell assemblies (positive electrode current collector-positive electrode active material layer-separator-negative electrode active material layer-negative electrode current collector), in a process in which a foreign matter pierces the battery and penetrates through it, scraps generated in the destruction often come into random contact, which tends to cause an internal short circuit. In addition, heat release of the internal short circuit tends to cause a series of chain reactions including thermal runaway. Therefore, it is necessary to provide a high-safety secondary battery to minimize or avoid occurrence of an internal short circuit and improve battery safety.

### SUMMARY

Embodiments of this application provide a secondary battery, for which an elongation rate of a current collector, an elongation rate of a separator, and a thickness of an active material layer are properly designed, so that when the secondary battery is mechanically abused, an internal short circuit can be prevented from occurring inside the secondary battery or has a lower occurrence probability. In this way, battery safety is improved.

A first aspect of embodiments of this application provides a secondary battery, including at least one battery cell assembly. The battery cell assembly includes a positive electrode plate, a negative electrode plate, and a separator disposed between the positive electrode plate and the negative electrode plate, and the positive electrode plate and the negative electrode plate each include a current collector and an active material layer disposed on the current collector. An elongation rate of the separator is greater than 100%, the elongation rate of the separator includes an elongation rate in the MD direction (Machine Direction, machine direction, that is, longitudinal direction, or length direction) and/or an elongation rate in the TD direction (Transverse Direction, perpendicular to the machine direction, that is, horizontal direction, or width direction), a ratio of the elongation rate of the separator to a thickness of the active material layer of the positive electrode plate and/or negative electrode plate is 3.0%/µm to 8.0%/µm, and a ratio of the elongation rate of the separator to an elongation rate of the current collector of the positive electrode plate and/or negative electrode plate is greater than or equal to 60. In this application, a separator with a high elongation rate is selected and the elongation rate of the current collector, the elongation rate of the separator, and the thickness of the active material layer are properly designed for the secondary battery. Therefore, when the secondary battery is pierced by a needle-shaped conductor or another foreign matter, the separator, with a higher elongation rate than the current collector and the active material layer, can effectively extend and wrap the needle-shaped conductor or another foreign matter, as well as scraps, generated in the destruction, of the current collector and active material layer. This prevents contact between the positive and negative electrode current collectors, the positive and negative electrode active materials, and the scraps to cause an internal short circuit, so that an occurrence probability of the internal short circuit is greatly reduced, chain reactions including thermal runaway are avoided from the source, and battery safety is improved. The secondary battery, when having a high energy density, can obtain high safety.

In this implementation of this application, when the secondary battery includes only one battery cell assembly, an elongation rate of a separator in the battery cell assembly is greater than 100%, the elongation rate of the separator includes an elongation rate in the length direction and/or an elongation rate in the width direction, a ratio of the elongation rate of the separator to a thickness of an active material layer of the positive electrode plate and/or negative electrode plate is 3.0%/µm to 8.0%/µm, and a ratio of the elongation rate of the separator to an elongation rate of a current collector of the positive electrode plate and/or negative electrode plate is greater than or equal to 60.

In this implementation of this application, when the secondary battery includes a plurality of stacked battery cell assemblies, at least a positive electrode plate and/or negative electrode plate and a separator in an outermost battery cell assembly in the secondary battery are configured in the foregoing manner. To further enhance safety of the battery, in some implementations of this application, alternatively, positive electrode plates and/or negative electrode plates and separators in two or more battery cell assemblies are configured in the foregoing manner. In some implementations of this application, alternatively, positive electrode plates and/or negative electrode plates and separators in the plurality of battery cell assemblies are all configured as follows: An elongation rate of the separator is greater than 100%, the elongation rate of the separator includes an elongation rate in the length direction and/or an elongation rate in the width direction, a ratio of the elongation rate of the separator to the thickness of the active material layer is 3.0%/µm to 8.0%/µm, and a ratio of the elongation rate of the separator to the elongation rate of the current collector is greater than or equal to 60. Both a stacked battery and a winding battery may include a plurality of battery cell assemblies stacked in a battery thickness direction. A majority of the plurality of battery cell assemblies have positive electrode plates and/or negative electrode plates and separators configured in the foregoing manner, which can further enhance battery safety.

In some implementations of this application, the ratio of the elongation rate of the separator to the thickness of the active material layer is 4.0%/µm to 6.0%/µm. With an appropriate ratio of the elongation rate of the separator to the thickness of the active material layer, when the battery is pierced by a foreign matter, the separator can extend to a specific length and wrap the foreign matter and various scraps, to reduce or avoid occurrence of an internal short circuit. In addition, a desirable energy density can be obtained, so that both battery safety and a high energy density are achieved.

In some implementations of this application, the ratio of the elongation rate of the separator to the elongation rate of the current collector is greater than or equal to 70. In some other implementations of this application, the ratio of the elongation rate of the separator to the elongation rate of the current collector is greater than or equal to 90. With the ratio of the elongation rate of the separator to the elongation rate of the current collector controlled at a high value, when the battery is pierced by a foreign matter, the separator can extend to a specific length and wrap the foreign matter and various scraps, to reduce or avoid occurrence of an internal short circuit. In addition, current collector scraps can be reduced to some extent. A larger ratio indicates a higher elongation rate of the separator, better effect of wrapping the foreign matter and scraps, better battery safety, and a lower elongation rate of the current collector. A lower elongation rate of the current collector helps ensure better mechanical properties and processing performance of the current collector, to prevent the current collector from deformation and breakage in a coating process.

In this implementation of this application, the positive electrode plate includes a positive electrode current collector and a positive electrode active material layer disposed on the positive electrode current collector, and the negative electrode plate includes a negative electrode current collector and a negative electrode active material layer disposed on the negative electrode current collector.

In some implementations of this application, the positive electrode current collector and the positive electrode active material layer in the positive electrode plate, and the separator are configured in the foregoing manner as follows: An elongation rate of the separator is greater than 100%, the elongation rate of the separator includes an elongation rate in the length direction and/or an elongation rate in the width direction, a ratio of the elongation rate of the separator to the thickness of the active material layer is 3.0%/µm to 8.0%/µm, and a ratio of the elongation rate of the separator to the elongation rate of the current collector is greater than or equal to 60. Because a short circuit between the positive electrode current collector and the negative electrode active material is a factor that causes the greatest risk of thermal runaway, proper design of the positive electrode and the separator can clearly improve battery safety. In some other implementations of this application, the negative electrode current collector and the negative electrode active material layer in the negative electrode plate, and the separator are configured in the foregoing manner, which can improve battery safety to some extent. In some other implementations of this application, alternatively, the positive electrode current collector and the positive electrode active material layer in the positive electrode plate, and the separator are configured in the foregoing manner, and the negative electrode current collector and the negative electrode active material layer in the negative electrode plate, and the separator are also configured in the foregoing manner. In this implementation, both the positive electrode plate and the negative electrode plate are properly designed, thereby better improving battery safety.

In some implementations of this application, the elongation rate of the separator is greater than or equal to 120%. In some other implementations of this application, the elongation rate of the separator is greater than or equal to 150%. The separator with a higher elongation rate can better play a protective role when the battery is damaged by an external mechanical force, for example, the battery is pierced by a foreign matter, and can alleviate an internal short circuit, thereby blocking thermal runaway in advance and improving battery safety.

In an implementation of this application, the separator is made of various kinds of materials that are capable of meeting a secondary battery system. The separator is made of one or more of the following: polyethylene, polyalphaolefin, polypropylene, polyethylene terephthalate, polymethylpentene, polybutylene, polyimide, polyamide, polyester, polyurethane, polycarbonate, cyclic olefin copolymer, polybenzimidazole, polybenzoxazole, aramid, polyvinylidene fluoride, polytetrafluoroethylene, poly(vinylidene fluoride-hexafluoropropylene), polyetherimide, polyvinyl alcohol, or a copolymer, a blend, a mixture, or a combination of the above-listed polymers.

In an implementation of this application, a thickness of the separator is 1 µm to 12 µm. Through the proper design of the elongation rate of the current collector, the elongation rate of the separator, and the thickness of the active material layer, this embodiment of this application can improve battery safety without increasing the thickness of the separator and lowering the energy density of the battery. In addition, the thinner separator design can reduce a volume of a non-active auxiliary material, which helps improve the energy density of the battery.

In an implementation of this application, the secondary battery is usually a stacked structure including a plurality of battery cell assemblies consisting of positive electrode current collector-positive electrode active material layer-separator-negative electrode active material layer-negative electrode current collector, forming a stacked battery or a winding battery. In some implementations of this application, the secondary battery may include positive electrode current collector-positive electrode active material layer-separator-negative electrode active material layer-negative electrode current collector-negative electrode active material layer-separator-positive electrode active material layer-positive electrode current collector.

In an implementation of this application, the active material layer includes an active material, and a binder and a conductive agent that are distributed in the active material. Mass percentages of the active material, binder, and conductive agent in the active material layer may be 80-98.5%, 0.-5%, and 1.0-15%.

In an implementation of this application, the current collector includes a metal foil or a metal foil with a functional coating on a surface. For example, the metal foil may be specifically an aluminum foil, a copper foil, or a titanium foil. The functional coating may include a functional material and a conductive agent, where the functional material may be specifically one or more of an active ion supplement, a flame retardant, or a swelling reliever. The functional coating includes functional materials. The functional materials include one or more of lithium iron phosphate, lithium manganese iron phosphate, lithium vanadyl phosphate, lithium-rich manganese-based material, artificial graphite, natural graphite, hard carbon, soft carbon, carbonaceous mesophase spherule, carbon nanotube, graphene, carbon fiber, vapor-grown carbon fiber, activated carbon, porous carbon, acetylene black, Ketjen black, conductive ink, thermally expanded microsphere, polyethylene, polyamide, polybutadiene, ethylene-ethyl acrylate, ethylene-vinyl acetate copolymer, fluorinated ethylene-propylene copolymer, polyethylene terephthalate, polypyrrole and its derivatives, polyvinylidene fluoride, polytetrafluoroethylene, polyamide, sodium carboxymethyl cellulose, styrene-butadiene rubber, aluminum oxide, silicon oxide, zirconium oxide, aluminium hydroxide oxide, hexagonal boron nitride, MXene, perovskite, lithium aluminum titanium phosphate (LATP), lithium lanthanum titanium oxide (LLTO), lithium lanthanum zirconium oxide (LLZO), or a composite, a blend, or a combination of the above-listed materials. An overall elongation rate of the current collector is reduced after the metal foil is coated with the functional coating. The setting of the functional coating can improve battery safety and performance such as thermal conductivity and heat dissipation.

In this implementation of this application, the thickness of the active material layer is greater than or equal to 35 µm. The setting of the active material layer with a specific thickness can ensure a total quantity of active materials in the battery and ensure a high energy density of the battery.

In this implementation of this application, the elongation rate of the current collector is less than 3%. The current collector with a low elongation rate can effectively reduce a probability that the current collector scraps, generated when the battery is pierced by a foreign matter, disperse into the active material layer, and can therefore reduce occurrence of a contact short circuit. A lower elongation rate of the current collector indicates a greater tensile strength, better mechanical properties, and better processing performance.

In this implementation of this application, the secondary battery includes a lithium secondary battery, a potassium secondary battery, a sodium secondary battery, a zinc secondary battery, a magnesium secondary battery, or an aluminum secondary battery.

In this implementation of this application, the secondary battery may be of a winding structure or a stacked structure.

In this implementation of this application, the secondary battery further includes a packaging shell, and the one or more battery cell assemblies are packaged in the packaging shell.

An embodiment of this application further provides a terminal. The terminal includes a housing, and an electronic component and a battery that are accommodated in the housing. The battery includes the secondary battery according to the first aspect of embodiments of this application, and the battery supplies power to the electronic component.

For the secondary battery provided by the embodiments of this application, a separator with a high elongation rate is selected, the ratio of the elongation rate of the separator to the thickness of the active material layer is controlled at 3.0%/µm to 8.0%/µm, and the ratio of the elongation rate of the separator to the elongation rate of the current collector is controlled to be greater than or equal to 60. In this way, the separator has a higher elongation rate than the active material layer and the current collector, so that when the secondary battery is damaged by an external mechanical force, such as nail piercing, the separator can effectively extend compared to the current collector and the active material layer, and wrap a needle-shaped conductor and scraps, generated in the destruction, of the current collector and active material layer. This reduces an occurrence probability of a contact short circuit, especially preventing direct contact between the positive electrode current collector, with the highest risk of short circuit and heat release, and scraps thereof and the negative electrode active material layer, blocks occurrence of an internal short circuit in advance, alleviates chain reactions including thermal runaway from the source, and improves battery safety. With the proper design of the current collector, the separator, and the active material layer, the secondary battery of the embodiments of this application features high safety while ensuring a high energy density (≥600 Wh/l) and a fast charging capability (80% SOC in 30 min). A terminal product using such secondary battery can be more competitive.

### BRIEF DESCRIPTION OF DRAWINGS

FIG. 1 is a schematic diagram of a structure of a secondary battery according to an embodiment of this application;
FIG. 2 is a schematic diagram of a secondary battery pierced by a needle-shaped conductor according to an embodiment of this application; and
FIG. 3 is a schematic diagram of a structure of a terminal according to an embodiment of this application.

### DESCRIPTION OF EMBODIMENTS

The following describes embodiments of this application with reference to the accompanying drawings in embodiments of this application.

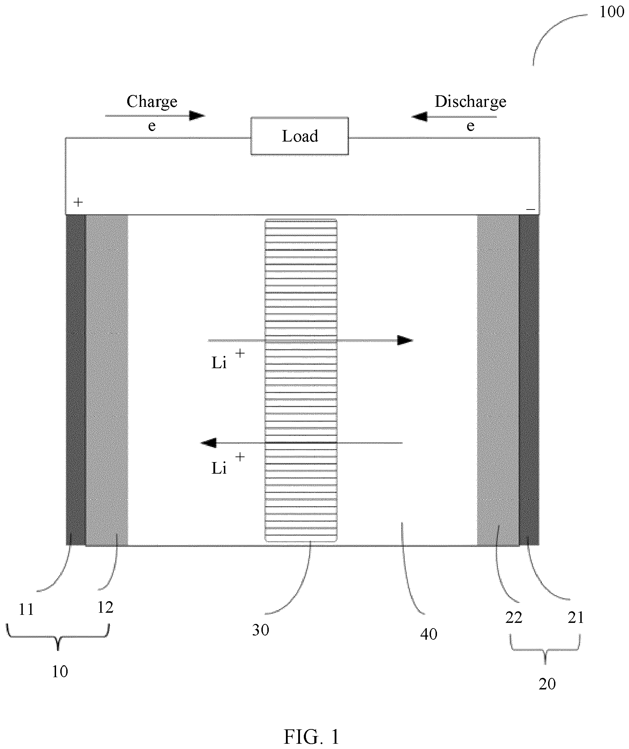

As shown in FIG. 1, an embodiment of this application provides a secondary battery 100. The secondary battery 100 includes a battery cell assembly, and the battery cell assembly includes a positive electrode plate 10, a negative electrode plate 20, a separator 30 disposed between the positive electrode plate 10 and the negative electrode plate 20, and an electrolyte 40. The positive electrode plate 10 includes a positive electrode current collector 11 and a positive electrode active material layer 12 disposed on the positive electrode current collector 11. The negative electrode plate 20 includes a negative electrode current collector 21 and a negative electrode active material layer 22 disposed on the negative electrode current collector 21. An elongation rate of the separator is greater than 100%. An elongation rate of the current collector in the positive electrode plate 10 and/or the negative electrode plate 20 and a thickness of the active material layer have the following relationship with the elongation rate of the separator: A ratio of the elongation rate of the separator to a thickness of the positive electrode active material layer 12 is 3.0%/µm to 8.0%/µm; a ratio of the elongation rate of the separator to an elongation rate of the positive electrode current collector 11 is greater than or equal to 60; and/or a ratio of the elongation rate of the separator to a thickness of the negative electrode active material layer 22 is 3.0%/µm to 8.0%/µm, and a ratio of the elongation rate of the separator to an elongation rate of the negative electrode current collector 21 is greater than or equal to 60.

In some implementations of this application, the secondary battery 100 may further include a plurality of stacked battery cell assemblies. Because a foreign matter generally pierces inwards from the outermost side of the battery when the battery is damaged by an external mechanical force, to improve battery safety, a positive electrode plate and/or a negative electrode plate, and a separator in the outermost battery cell assembly of the secondary battery are at least configured as follows: An elongation rate of the separator is greater than 100%, a ratio of the elongation rate of the separator to the thickness of the active material layer is 3.0%/µm to 8.0%/µm, and a ratio of the elongation rate of the separator to the elongation rate of the current collector is greater than or equal to 60. Certainly, to further enhance safety of the battery, in some implementations of this application, positive electrode plates and/or negative electrode plates and separators in a plurality of (two or more) battery cell assemblies are configured in the foregoing manner. In some implementations of this application, alternatively, positive electrode plates and/or negative electrode plates and separators in the plurality of battery cell assemblies are all configured as follows: An elongation rate of the separator is greater than 100%, a ratio of the elongation rate of the separator to the thickness of the active material layer is 3.0%/µm to 8.0%/µm, and a ratio of the elongation rate of the separator to the elongation rate of the current collector is greater than or equal to 60.

In some implementations of this application, the positive electrode current collector 11 and the positive electrode active material layer 12 in the positive electrode plate 10, and the separator 30 are configured in the foregoing manner as follows: An elongation rate of the separator is greater than 100%, a ratio of the elongation rate of the separator to the thickness of the active material layer is 3.0%/µm to 8.0%/µm, and a ratio of the elongation rate of the separator to the elongation rate of the current collector is greater than or equal to 60. In some other implementations of this application, the negative electrode current collector 21 and the negative electrode active material layer 22 in the negative electrode plate 20, and the separator 30 are configured in the foregoing manner. In some other implementations of this application, alternatively, the positive electrode current collector 11 and the positive electrode active material layer 12 in the positive electrode plate 10, and the separator 30 are configured in the foregoing manner, and the negative electrode current collector 21 and the negative electrode active material layer 22 in the negative electrode plate 20, and the separator 30 are configured in the foregoing manner.

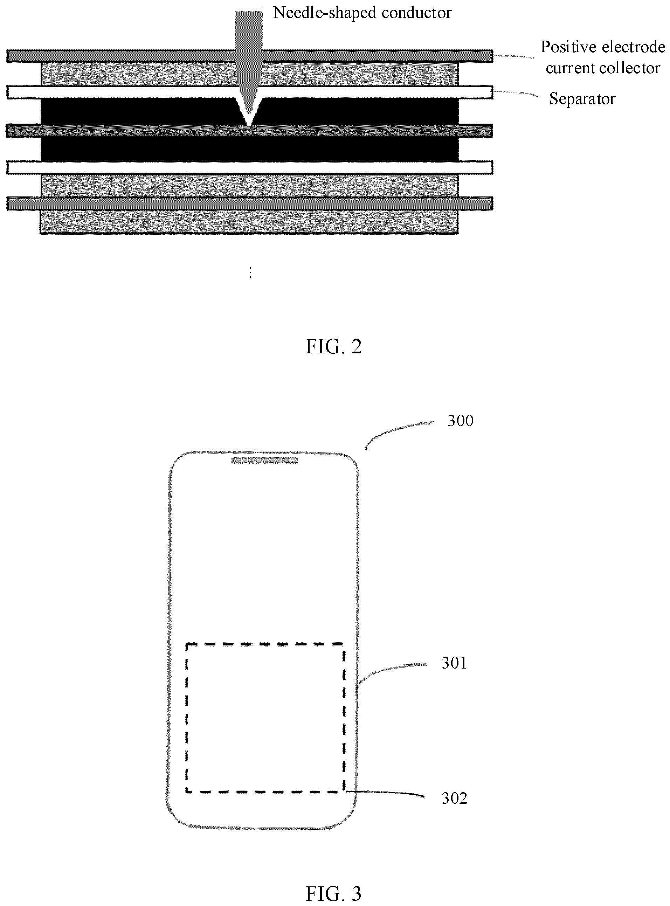

In this application, a separator with a high elongation rate is selected and the elongation rate of the current collector, the elongation rate of the separator, and the thickness of the active material layer are properly designed for the secondary battery, thereby improving battery safety. As shown in FIG. 2, when the secondary battery is pierced by a needle-shaped conductor or another foreign matter, the separator, with a higher elongation rate than the current collector and the active material layer, can effectively extend and wrap the needle-shaped conductor or another foreign matter, as well as scraps, generated in the destruction, of the current collector and active material layer. This prevents contact between the positive and negative electrode current collectors, the positive and negative electrode active materials, and the scraps to cause an internal short circuit, so that occurrence of the internal short circuit is prevented in advance, chain reactions including thermal runaway are avoided from the source, and battery safety is improved. The secondary battery, when having a high energy density (≥600 Wh/l), can obtain high safety.

In an implementation of this application, the elongation rate of the separator includes an elongation rate in a length direction and/or an elongation rate in a width direction. In other words, in some implementations of this application, the separator may have an elongation rate greater than 100% only in the length direction; in some other implementations of this application, the separator may have an elongation rate greater than 100% only in the width direction; or in some other implementations, the separator may have an elongation rate greater than 100% in both the length direction and the width direction.

In some implementations of this application, the elongation rate of the separator may alternatively be greater than or equal to 120%. In some other implementations of this application, the elongation rate of the separator is greater than or equal to 150%. In some implementations, the elongation rate of the separator may be, for example, 100% to 300%. In a scenario of mechanical abuse of the battery, the selected separator with a high elongation rate, under the action of a foreign matter, extends and wraps the foreign matter and resulting scraps, maximally avoiding contact between the scraps of the damaged current collector and the active materials, as well as direct contact between the scraps of the current collector, and improving safety of the secondary battery. The separator with a higher elongation rate can better play a protective role when the battery is pierced by a foreign matter, avoiding occurrence of thermal runaway.

In some implementations of this application, the ratio of the elongation rate of the separator to the thickness of the active material layer is 4.0%/µm to 6.0%/µm. With an appropriate ratio of the elongation rate of the separator to the thickness of the active material layer, when the battery is damaged by an external mechanical force, for example, the battery is pierced by a foreign matter, the separator can extend to a specific length and wrap the foreign matter and various scraps, to reduce or avoid occurrence of an internal short circuit. In addition, a high energy density can be obtained, so that both battery safety and high energy density are achieved.

In some implementations of this application, the ratio of the elongation rate of the separator to the elongation rate of the current collector is greater than or equal to 70. In some other implementations of this application, the ratio of the elongation rate of the separator to the elongation rate of the current collector is greater than or equal to 90. With the ratio of the elongation rate of the separator to the elongation rate of the current collector controlled at a high value, when the battery is pierced by a foreign matter, the separator can extend to a specific length and wrap the foreign matter and various scraps, to reduce or avoid occurrence of an internal short circuit. In addition, current collector scraps can be reduced or avoided to some extent.

In an implementation of this application, the separator may be made of various kinds of materials that are capable of meeting a secondary battery system. Specifically, the separator may be made of one or more of the following: polyethylene, polyalphaolefin, polypropylene, polyethylene terephthalate, polymethylpentene, polybutylene, polyimide, polyamide, polyester, polyurethane, polycarbonate, cyclic olefin copolymer, polybenzimidazole, polybenzoxazole, aramid, polyvinylidene fluoride, polytetrafluoroethylene, poly(vinylidene fluoride-hexafluoropropylene), polyetherimide, polyvinyl alcohol, or a copolymer, a blend, a mixture, or a combination of the above-listed polymers. In an implementation of this application, a thickness of the separator may be 1 µm to 12 µm. In an implementation of this application, a thickness of the separator may be 2 µm to 10 µm.

In an implementation of this application, the active material layer includes an active material, and a binder and a conductive agent that are distributed in the active material. The active material is a substance into/from which active ions (Li⁺, Na⁺, K⁺, Mg²⁺, Zn²⁺, Al³⁺, or the like) can be intercalated or deintercalated. Mass percentages of the active material, binder, and conductive agent in the active material layer may be 80-98.5%, 0.-5%, and 1.0-15%. The mass percentages of the active material, binder, and conductive agent may be selected comprehensively based on different materials, battery types, application requirements, and the like. Refer to FIG. 1. The active material layers include the positive electrode active material layer 12 and the negative electrode active material layer 22. The positive electrode active material layer 12 includes a positive electrode active material, a binder, and a conductive agent. The positive electrode active material includes, but is not limited to one or more of lithium cobalt oxide, lithium iron phosphate, sodium iron phosphate, lithium manganese iron phosphate, lithium vanadium phosphate, sodium vanadium phosphate, lithium vanadyl phosphate, sodium vanadyl phosphate, lithium vanadate, lithium nickelate, lithium manganate, lithium nickel cobalt manganate, lithium-rich manganese-based material, lithium nickel cobalt aluminate, lithium titanate, or a composite, a blend, or a combination of the above-listed materials. The negative electrode active material layer 22 includes a negative electrode active material, a binder, and a conductive agent. The negative electrode active material includes, but is not limited to one or more of artificial graphite, natural graphite, hard carbon, soft carbon, carbonaceous mesophase spherule, silicon carbon, silicon oxygen, carbon nanotube, graphene, or a composite, a blend, or a combination of the above-listed materials.

In an implementation of this application, the binder and the conductive agent may be of the type commonly used in preparation of electrode plates. Specifically, the binder may be, but is not limited to, one or more of polyvinylidene fluoride, polytetrafluoroethylene, polyamide, sodium carboxymethylcellulose, styrene-butadiene rubber, or polyacrylic acid. The conductive agent may be, but is not limited to, one or more of conductive carbon super-P, carbon nanotube, graphene, carbon fiber, vapor-grown carbon fiber, activated carbon, porous carbon, acetylene black, or Ketjen black.

In an implementation of this application, the current collector includes a metal foil or a metal foil with a functional coating on a surface, specifically, for example, a copper foil or an aluminum foil. The copper foil is usually used as the negative electrode current collector and the aluminum foil is usually used as the positive electrode current collector. In this implementation of this application, the elongation rate of the current collector is less than 3%, which may be specifically 1%, 1.5%, 2%, or 2.5%. A thickness of the current collector may be 8 µm to 20 µm.

In this implementation of this application, the functional coating may include a functional material and a conductive agent, where the functional material may be specifically one or more of an active ion supplement, a flame retardant, or a swelling reliever. More specifically, the functional materials may include one or more of lithium iron phosphate, lithium manganese iron phosphate, lithium vanadyl phosphate, lithium-rich manganese-based material, artificial graphite, natural graphite, hard carbon, soft carbon, carbonaceous mesophase spherule, carbon nanotube, graphene, carbon fiber, vapor-grown carbon fiber, activated carbon, porous carbon, acetylene black, Ketjen black, conductive ink, thermally expanded microsphere, polyethylene, polyamide, polybutadiene, ethylene-ethyl acrylate, ethylene-vinyl acetate copolymer, fluorinated ethylene-propylene copolymer, polyethylene terephthalate, polypyrrole and its derivatives, polyvinylidene fluoride, polytetrafluoroethylene, polyamide, sodium carboxymethyl cellulose, styrene-butadiene rubber, aluminum oxide, silicon oxide, zirconium oxide, aluminium hydroxide oxide, hexagonal boron nitride, MXene, perovskite, lithium aluminum titanium phosphate (LATP), lithium lanthanum titanium oxide (LLTO), lithium lanthanum zirconium oxide (LLZO), a composite, a blend, or a combination of the above-listed materials.

In this implementation of this application, the thickness of the active material layer is greater than or equal to 35 µm. The setting of the active material layer with a specific thickness can ensure a total quantity of active materials in the battery and improve an energy density of the battery. In some embodiments of this application, the thickness of the active material layer is 35 µm to 60 µm. In some other embodiments of this application, the thickness of the active material layer is 38 µm to 50 µm. In some of the implementations, a thickness of a negative electrode active material layer is greater than a thickness of a positive electrode active material layer

In this implementation of this application, a peeling strength of the active material layer is greater than 8 N/m. The active material layer is firmly bonded on a surface of the current collector, and can enhance structural stability of the battery and improve cycle life of the battery.

In this implementation of this application, the secondary battery may be a lithium secondary battery, a potassium secondary battery, a sodium secondary battery, a zinc secondary battery, a magnesium secondary battery, or an aluminum secondary battery. The secondary battery may be of a winding structure or a stacked structure. In this implementation of this application, the secondary battery further includes a packaging shell, where the packaging shell is configured to package the positive electrode plate, negative electrode plate, separator, and electrolyte, and the packaging shell may be, but not limited to, an aluminum-plastic film or a metal shell. The secondary battery may be prepared by using an existing conventional process. The secondary battery provided by this embodiment of the present invention may be used in terminal consumer products, such as cell phones, tablet computers, mobile power supplies, portable computers, notebook computers, and other wearable or movable electronic devices or automobiles, to improve safety and reliability of the products.

As shown in FIG. 3, an embodiment of this application further provides a terminal 300. The terminal 300 may be a cell phone, a tablet computer, a mobile power supply, a notebook computer, a portable computer, a smart wearable product, an automobile, or the like. The terminal 300 includes a housing 301, an electronic component accommodated in the housing 301, and a battery 302, where the battery 302 supplies power to the electronic component, and the battery 302 is the secondary battery provided in the foregoing embodiment of this application. The housing 301 may include a front cover arranged on the front side of the terminal and a rear cover arranged on the rear side, and the battery may be fastened on the inner surface of the rear cover.

The technical solution of the embodiments of this application is further described below by using specific examples.

### Embodiment 1

Lithium cobalt oxide was used as a positive electrode active material, and an aluminum foil was used as a positive electrode current collector. A positive electrode active material layer was uniformly coated on a surface of the positive electrode current collector, where the positive electrode active material layer was made of 97.0 wt% lithium cobalt oxide, 1.6 wt% polyvinylidene fluoride, and 1.4 wt% conductive carbon black. Then, the positive electrode current collector was dried at 80°C, and was subject to cold pressing, cutting, slitting, and vacuum drying, to obtain a positive electrode plate.

Graphite was used as a negative electrode active material, and a copper foil was used as a negative electrode current collector. A negative electrode active material layer was uniformly coated on a surface of the negative electrode current collector, where the negative electrode active material layer was made of 97.4 wt% graphite, 1.4 wt% styrene-butadiene rubber, and 1.2 wt% sodium carboxymethyl cellulose. Then, the negative electrode current collector was dried at 80°C, and was subject to cold pressing, cutting, slitting, and vacuum drying, to obtain a negative electrode plate.

The positive electrode plate and the negative electrode plate, separated by a separator, were wound together after slitting, to prepare a wound bare cell. The top side of the bare cell was sealed; and spraying, vacuum drying, and liquid injection were performed on the bare cell. Then, after the bare cell stood at room temperature and high temperature, formation and grading were performed, to obtain a secondary battery. An elongation rate of the separator was 180%, an elongation rate of the positive electrode current collector was 2%, an elongation rate of the negative electrode current collector was 2%, a thickness of the positive electrode active material layer was 38 µm, a thickness of the negative electrode active material layer was 50 µm, ratios of the elongation rate of the separator to the thickness of the positive electrode active material layer and the thickness of the negative electrode active material layer were 4.7%/µm and 3.6%/µm, respectively, and a ratio of the elongation rate of the separator to the elongation rate of the current collector was 90 (the ratio is set to a same value for the positive electrode current collector and the negative electrode current collector).

### Embodiments 2 to 19

A preparation method for a secondary battery is the same as the method of Embodiment 1, with differences only in that an elongation rate of a separator, a ratio of the elongation rate of the separator to a thickness of an active material layer, and a ratio of the elongation rate of the separator to an elongation rate of a current collector have different values than those in Embodiment 1, as shown in Table 1.

### Comparative Example 1

A preparation method herein is the same as the method of Embodiment 1, with differences only in the following: An elongation rate of the separator in Comparative Example 1 is 50%, ratios of the elongation rate of the separator to the thickness of the positive electrode active material layer and the thickness of the negative electrode active material layer are 1.32%/µm and 1.0%/µm, respectively, and a ratio of the elongation rate of the separator to the elongation rate of the current collector is 25.

**Table 1: Battery parameter values and battery performance test results of Embodiments 1 to 19 and Comparative Example 1**

| Sequence number | MD elongation rate of the separator (%) | Thickness of the active material layer (µm) | Ratio of the elongation rate of the separator to the thickness of the active material layer (%/µm) | Ratio of the elongation rate of the separator to the elongation rate of the current collector | Nail piercing pass rate | Energy density (Wh/l) | Fast charging capacity: SOC in 30 min |
|---|---|---|---|---|---|---|---|
| Embodiment 1 | 180 | Positive electrode: 38 | Positive electrode: 4.7 | 90 | 5/5 Pass | 695 | 80.7% |
| | | Negative electrode: 50 | Negative electrode: 3.6 | | | | |
| Embodiment 2 | 190 | Positive electrode: 38 | Positive electrode: 5.0 | 95 | 5/5 Pass | 695 | 80.7% |
| | | Negative electrode: 50 | Negative electrode: 3.8 | | | | |
| Embodiment 3 | 200 | Positive electrode: 38 | Positive electrode: 5.26 | 100 | 5/5 Pass | 695 | 80.7% |
| | | Negative electrode: 50 | Negative electrode: 4.0 | | | | |
| Embodiment 4 | 210 | Positive electrode: 38 | Positive electrode: 5.53 | 105 | 5/5 Pass | 695 | 80.7% |
| | | Negative electrode: 50 | Negative electrode: 4.2 | | | | |
| Embodiment 5 | 220 | Positive electrode: 38 | Positive electrode: 5.79 | 110 | 5/5 Pass | 695 | 80.7% |
| | | Negative electrode: 50 | Negative electrode: 4.4 | | | | |
| Embodiment 6 | 230 | Positive electrode: 38 | Positive electrode: 6.05 | 115 | 5/5 Pass | 695 | 80.7% |
| | | Negative electrode: 50 | Negative electrode: 4.6 | | | | |
| Embodiment 7 | 240 | Positive electrode: 38 | Positive electrode: 6.32 | 120 | 5/5 Pass | 695 | 80.7% |
| | | Negative electrode: 50 | Negative electrode: 4.8 | | | | |
| Embodiment 8 | 250 | Positive electrode: 38 | Positive electrode: 6.58 | 125 | 5/5 Pass | 695 | 80.7% |
| | | Negative electrode: 50 | Negative electrode: 5.0 | | | | |
| Embodiment 9 | 260 | Positive electrode: 38 | Positive electrode: 6.84 | 130 | 5/5 Pass | 695 | 80.7% |
| | | Negative electrode: 50 | Negative electrode: 5.2 | | | | |
| Embodiment 10 | 270 | Positive electrode: 38 | Positive electrode: 7.11 | 135 | 5/5 Pass | 695 | 80.7% |
| | | Negative electrode: 50 | Negative electrode: 5.4 | | | | |
| Embodiment 11 | 280 | Positive electrode: 38 | Positive electrode: 7.37 | 140 | 5/5 Pass | 695 | 80.7% |
| | | Negative electrode: 50 | Negative electrode: 5.6 | | | | |
| Embodiment 12 | 290 | Positive electrode: 38 | Positive electrode: 7.63 | 145 | 5/5 Pass | 695 | 80.7% |
| | | Negative electrode: 50 | Negative electrode: 5.8 | | | | |
| Embodiment 13 | 300 | Positive electrode: 38 | Positive electrode: 7.89 | 150 | 5/5 Pass | 695 | 80.7% |
| | | Negative electrode: 50 | Negative electrode: 6.0 | | | | |
| Embodiment 14 | 170 | Positive electrode: 38 | Positive electrode: 4.47 | 85 | 5/5 Pass | 695 | 80.7% |
| | | Negative electrode: 50 | Negative electrode: 3.4 | | | | |
| Embodiment 15 | 160 | Positive electrode: 38 | Positive electrode: 4.21 | 80 | 5/5 Pass | 695 | 80.7% |
| | | Negative electrode: 50 | Negative electrode: 3.2 | | | | |
| Embodiment 16 | 150 | Positive electrode: 38 | Positive electrode: 3.95 | 75 | 5/5 Pass | 695 | 80.7% |
| | | Negative electrode: 50 | Negative electrode: 3.0 | | | | |
| Embodiment 17 | 140 | Positive electrode: 38 | Positive electrode: 3.68 | 70 | 5/5 Pass | 695 | 80.7% |
| | | Negative electrode: 50 | Negative electrode: 2.8 | | | | |
| Embodiment 18 | 130 | Positive electrode: 38 | Positive electrode: 3.42 | 65 | 5/5 Pass | 695 | 80.7% |
| | | Negative electrode: 50 | Negative electrode: 2.6 | | | | |
| Embodiment 19 | 120 | Positive electrode: 38 | Positive electrode: 3.16 | 60 | 5/5 Pass | 695 | 80.7% |
| | | Negative electrode: 50 | Negative electrode: 2.4 | | | | |
| Comparative Example 1 | 50 | Positive electrode: 38 | Positive electrode: 1.32 | 25 | 0/5 Pass | 695 | 80.7% |
| | | Negative electrode: 50 | Negative electrode: 1.0 | | | | |

It can be learned from the test results that, for a lithium cobalt oxide-graphite battery system, under a condition that the battery is designed to have a high energy density of 695 Wh/1 and fast charging performance of 80.7% SOC in 30 min, the battery gets a high pass rate in the nail piercing test when a separator with an elongation rate greater than 100% is selected and it is ensured that the ratio of the elongation rate of the separator to the thickness of the active material layer (the positive electrode active material layer and the negative electrode active material layer) is within a range from 3.0%/µm to 8.0%/µm, and that the ratio of the elongation rate of the separator to the elongation rate of the current collector is greater than or equal to 60. It can also be learned from Embodiments 17 to 19 that, when only a ratio of the elongation rate of the separator to the thickness of the positive electrode active material layer is within the range from 3.0%/µm to 8.0%/µm, but a ratio of the elongation rate of the separator to the thickness of the negative electrode active material layer is beyond the range, the battery can also get a high pass rate in the nail piercing test, that is, the battery still has high safety. This is mainly because a short circuit between the positive electrode current collector and the negative electrode active material is the biggest risk factor leading to thermal runaway, and proper design of the positive electrode and the separator can better improve battery safety. The Comparative Example 1 fails the nail piercing test because the elongation rate of the separator, the ratio of the elongation rate of the separator to the thickness of the active material layer, and the ratio of the elongation rate of the separator to the elongation rate of the current collector do not meet design requirements of this embodiment of this application.

### Embodiment 20

A preparation method herein is the same as the method of Embodiment 1, with differences only in the following: A thickness of the positive electrode active material layer in Embodiment 20 is 36 µm, a thickness of the negative electrode active material layer is 48 µm, and ratios of the elongation rate of the separator to the thicknesses of the active material layers are 5.0%/µm and 3.75%/µm, respectively.

### Embodiment 21

A preparation method herein is the same as the method of Embodiment 1, with differences only in the following: A thickness of the positive electrode active material layer in Embodiment 21 is 39 µm, a thickness of the negative electrode active material layer is 51 µm, and ratios of the elongation rate of the separator to the thicknesses of the active material layers are 4.62%/µm and 3.53%/µm, respectively.

### Embodiment 22

A preparation method herein is the same as the method of Embodiment 1, with differences only in the following: A thickness of the positive electrode active material layer in Embodiment 22 is 40 µm, a thickness of the negative electrode active material layer is 52 µm, and ratios of the elongation rate of the separator to the thicknesses of the active material layers are 4.5%/µm and 3.46%/µm, respectively.

### Embodiment 23

A preparation method herein is the same as the method of Embodiment 1, with differences only in the following: A thickness of the positive electrode active material layer in Embodiment 23 is 41 µm, a thickness of the negative electrode active material layer is 53 µm, and ratios of the elongation rate of the separator to the thicknesses of the active material layers are 4.39%/µm and 3.40%/µm, respectively.

### Embodiment 24

A preparation method herein is the same as the method of Embodiment 1, with differences only in the following: A thickness of the positive electrode active material layer in Embodiment 24 is 42 µm, a thickness of the negative electrode active material layer is 54 µm, and ratios of the elongation rate of the separator to the thicknesses of the active material layers are 4.28%/µm and 3.33%/µm, respectively.

### Embodiment 25

A preparation method herein is the same as the method of Embodiment 1, with differences only in the following: A thickness of the positive electrode active material layer in Embodiment 25 is 43 µm, a thickness of the negative electrode active material layer is 55 µm, and ratios of the elongation rate of the separator to the thicknesses of the active material layers are 4.19%/µm and 3.27%/µm, respectively.

### Embodiment 26

A preparation method herein is the same as the method of Embodiment 1, with differences only in the following: A thickness of the positive electrode active material layer in Embodiment 26 is 44 µm, a thickness of the negative electrode active material layer is 56 µm, and ratios of the elongation rate of the separator to the thicknesses of the active material layers are 4.09%/µm and 3.21%/µm, respectively.

### Embodiment 27

A preparation method herein is the same as the method of Embodiment 1, with differences only in the following: A thickness of the positive electrode active material layer in Embodiment 27 is 45 µm, a thickness of the negative electrode active material layer is 57 µm, and ratios of the elongation rate of the separator to the thicknesses of the active material layers are 4.0%/µm and 3.16%/µm, respectively.

### Embodiment 28

A preparation method herein is the same as the method of Embodiment 1, with differences only in the following: A thickness of the positive electrode active material layer in Embodiment 28 is 46 µm, a thickness of the negative electrode active material layer is 58 µm, and ratios of the elongation rate of the separator to the thicknesses of the active material layers are 3.91%/µm and 3.10%/µm, respectively.

### Embodiment 29

A preparation method herein is the same as the method of Embodiment 1, with differences only in the following: A thickness of the positive electrode active material layer in Embodiment 29 is 47 µm, a thickness of the negative electrode active material layer is 59 µm, and ratios of the elongation rate of the separator to the thicknesses of the active material layers are 3.83%/µm and 3.05%/µm, respectively.

### Comparative Example 2

A preparation method herein is the same as the method of Embodiment 1, with differences only in the following: A thickness of the positive electrode active material layer in Comparative Example 2 is 70 µm, a thickness of the negative electrode active material layer is 85 µm, and ratios of the elongation rate of the separator to the thicknesses of the active material layers are 2.57%/µm and 2.12%/µm, respectively.

**Table 2: Test results of Embodiments 20 to 29 and Comparative Example 2**

| Sequence number | MD elongation rate of the separator (%) | Thickness of the active material layer (µm) | Ratio of the elongation rate of the separator to the thickness of the active material layer (%/µm) | Ratio of the elongation rate of the separator to the elongation rate of the current collector | Nail piercing pass rate | Energy density (Wh/l) | Fast charging capacity: SOC in 30 min |
|---|---|---|---|---|---|---|---|
| Embodiment 20 | 180 | Positive electrode: 36 | Positive electrode: 5.0 | 90 | 5/5 Pass | 690 | 80.7% |
| | | Negative electrode: 48 | Negative electrode: 3.75 | | | | |
| Embodiment 21 | 180 | Positive electrode: 39 | Positive electrode: 4.62 | 90 | 5/5 Pass | 696 | 80.7% |
| | | Negative electrode: 51 | Negative electrode: 3.53 | | | | |
| Embodiment 22 | 180 | Positive electrode: 40 | Positive electrode: 4.5 | 90 | 5/5 Pass | 698 | 80.6% |
| | | Negative electrode: 52 | Negative electrode: 3.46 | | | | |
| Embodiment 23 | 180 | Positive electrode: 41 | Positive electrode: 4.39 | 90 | 5/5 Pass | 700 | 80.6% |
| | | Negative electrode: 53 | Negative electrode: 3.4 | | | | |
| Embodiment 24 | 180 | Positive electrode: 42 | Positive electrode: 4.28 | 90 | 5/5 Pass | 702 | 80.5% |
| | | Negative electrode: 54 | Negative electrode: 3.33 | | | | |
| Embodiment 25 | 180 | Positive electrode: 43 | Positive electrode: 4.19 | 90 | 5/5 Pass | 704 | 80.4% |
| | | Negative electrode: 55 | Negative electrode: 3.27 | | | | |
| Embodiment 26 | 180 | Positive electrode: 44 | Positive electrode: 4.09 | 90 | 5/5 Pass | 706 | 80.3% |
| | | Negative electrode: 56 | Negative electrode: 3.21 | | | | |
| Embodiment 27 | 180 | Positive electrode: 45 | Positive electrode: 4.0 | 90 | 5/5 Pass | 708 | 80.2% |
| | | Negative electrode: 57 | Negative electrode: 3.16 | | | | |
| Embodiment 28 | 180 | Positive electrode: 46 | Positive electrode: 3.91 | 90 | 5/5 Pass | 710 | 80.1% |
| | | Negative electrode: 58 | Negative electrode: 3.10 | | | | |
| Embodiment 29 | 180 | Positive electrode: 47 | Positive electrode: 3.83 | 90 | 5/5 Pass | 712 | 80.0% |
| | | Negative electrode: 59 | Negative electrode: 3.05 | | | | |
| Comparative Example 2 | 180 | Positive electrode: 70 | Positive electrode: 2.57 | 90 | 1/5 Pass | 730 | 79.0% |
| | | Negative electrode: 85 | Negative electrode: 2.12 | | | | |

It can be learned from the test data that, the battery of each of Embodiments 20 to 29 gets a high pass rate in the battery nail piercing test because a separator with a high elongation rate is selected, and the ratio of the elongation rate of the separator to the thickness of the active material layer and the ratio of the elongation rate of the separator to the elongation rate of the current collector are within the range of this embodiment of this application. In Comparative Example 2, although the elongation rate of the selected separator and the ratio of the elongation rate of the separator to the elongation rate of the current collector are the same as those of Embodiments 20 to 29, the ratio of the elongation rate of the separator to the thickness of the active material layer does not meet the design requirements of this embodiment of this application. Therefore, the battery gets a low pass rate in the battery nail piercing test.

### Embodiment 30

A preparation method herein is the same as the method of Embodiment 1, with a difference only in that the positive electrode active material is lithium nickel cobalt manganate.

### Embodiment 31

A preparation method herein is the same as the method of Embodiment 1, with a difference only in that the positive electrode active material is lithium iron phosphate.

### Embodiment 32

A preparation method herein is the same as the method of Embodiment 1, with a difference only in that the positive electrode active material is a combination of lithium cobalt oxide and lithium iron phosphate with a mass ratio of 97:3.

### Embodiment 33

A preparation method herein is the same as the method of Embodiment 1, with a difference only in that the positive electrode active material is lithium nickel cobalt aluminate.

### Embodiment 34

A preparation method herein is the same as the method of Embodiment 1, with a difference only in that the negative electrode active material is a composite of graphite and silicon carbon with a mass ratio of 95:5.

### Embodiment 35

A preparation method herein is the same as the method of Embodiment 1, with a difference only in that the negative electrode active material is a composite of graphite and silicon carbon with a mass ratio of 90:10.

### Embodiment 36

A preparation method herein is the same as the method of Embodiment 1, with a difference only in that the negative electrode active material is a composite of graphite and silicon carbon with a mass ratio of 85:15.

### Embodiment 37

A preparation method herein is the same as the method of Embodiment 1, with a difference only in that the negative electrode active material is a composite of graphite and silicon oxygen with a mass ratio of 90:10.

### Embodiment 38

A preparation method herein is the same as the method of Embodiment 1, with a difference only in that the negative electrode active material is a composite of graphite and silicon oxygen with a mass ratio of 80:20.

### Embodiment 39

A preparation method herein is the same as the method of Embodiment 1, with a difference only in that the negative electrode active material is hard carbon.

**Table 3: Test results of Embodiments 30 to 39**

| Sequence number | MD elongation rate of the separator (%) | Thickness of the active material layer (µm) | Ratio of the elongation rate of the separator to the thickness of the active material layer (%/µm) | Ratio of the elongation rate of the separator to the elongation rate of the current collector | Nail piercing pass rate | Energy density (Wh/l) | Fast charging capacity: SOC in 30 min |
|---|---|---|---|---|---|---|---|
| Embodiment 30 | 180 | Positive electrode: 38 | Positive electrode: 4.7 | 90 | 5/5 Pass | 680 | 80.5% |
| | | Negative electrode: 50 | Negative electrode: 3.6 | | | | |
| Embodiment 31 | 180 | Positive electrode: 38 | Positive electrode: 4.7 | 90 | 5/5 Pass | 630 | 80.0% |
| | | Negative electrode: 50 | Negative electrode: 3.6 | | | | |
| Embodiment 32 | 180 | Positive electrode: 38 | Positive electrode: 4.7 | 90 | 5/5 Pass | 690 | 80.6% |
| | | Negative electrode: 50 | Negative electrode: 3.6 | | | | |
| Embodiment 33 | 180 | Positive electrode: 38 | Positive electrode: 4.7 | 90 | 5/5 Pass | 680 | 80.6% |
| | | Negative electrode: 50 | Negative electrode: 3.6 | | | | |
| Embodiment 34 | 180 | Positive electrode: 38 | Positive electrode: 4.7 | 90 | 5/5 Pass | 690 | 80.5% |
| | | Negative electrode: 50 | Negative electrode: 3.6 | | | | |
| Embodiment 35 | 180 | Positive electrode: 38 | Positive electrode: 4.7 | 90 | 5/5 Pass | 695 | 80.4% |
| | | Negative electrode: 50 | Negative electrode: 3.6 | | | | |
| Embodiment 36 | 180 | Positive electrode: 38 | Positive electrode: 4.7 | 90 | 5/5 Pass | 700 | 80.3% |
| | | Negative electrode: 50 | Negative electrode: 3.6 | | | | |
| Embodiment 37 | 180 | Positive electrode: 38 | Positive electrode: 4.7 | 90 | 5/5 Pass | 695 | 80.5% |
| | | Negative electrode: 50 | Negative electrode: 3.6 | | | | |
| Embodiment 38 | 180 | Positive electrode: 38 | Positive electrode: 4.7 | 90 | 5/5 Pass | 600 | 82.1% |
| | | Negative electrode: 50 | Negative electrode: 3.6 | | | | |
| Embodiment 39 | 180 | Positive electrode: 38 | Positive electrode: 4.7 | 90 | 5/5 Pass | 720 | 80.1% |
| | | Negative electrode: 50 | Negative electrode: 3.6 | | | | |

It can be learned from the test data that, for different positive and negative active material battery systems, by controlling the ratio of the elongation rate of the separator to the thickness of the active material layer and the ratio of the elongation rate of the separator to the elongation rate of the current collector within the range of this embodiment of this application, the battery can get a high pass rate in the nail piercing test and has high safety. In addition, the battery can also have a high energy density and good fast charging performance.

### Embodiment 40

A preparation method herein is the same as the method of Embodiment 1, with a difference only in that the positive electrode current collector is an aluminum foil with a conductive carbon coating. A ratio of an elongation rate of the separator to an elongation rate of the positive electrode current collector is 120.

### Embodiment 41

A preparation method herein is the same as the method of Embodiment 1, with a difference only in that the positive electrode current collector is an aluminum foil with a nano lithium iron phosphate coating. A ratio of an elongation rate of the separator to an elongation rate of the positive electrode current collector is 140.

### Embodiment 42

A preparation method herein is the same as the method of Embodiment 1, with a difference only in that the positive electrode current collector is an aluminum foil with a conductive ink coating. A ratio of an elongation rate of the separator to an elongation rate of the positive electrode current collector is 150.

### Embodiment 43

A preparation method herein is the same as the method of Embodiment 1, with a difference only in that the positive electrode current collector is an aluminum foil with a thermally expanded microsphere coating. A ratio of an elongation rate of the separator to an elongation rate of the positive electrode current collector is 160.

### Embodiment 44

A preparation method herein is the same as the method of Embodiment 1, with a difference only in that the positive electrode current collector is an aluminum foil with a poly-1-butylpyrrole coating. A ratio of an elongation rate of the separator to an elongation rate of the positive electrode current collector is 160.

### Embodiment 45

A preparation method herein is the same as the method of Embodiment 1, with a difference only in that the positive electrode current collector is an aluminum foil with a coating of nano lithium iron phosphate coated with poly-3-butylpyrrole. A ratio of an elongation rate of the separator to an elongation rate of the positive electrode current collector is 170.

### Embodiment 46

A preparation method herein is the same as the method of Embodiment 1, with a difference only in that the positive electrode current collector is an aluminum foil having PTC functions of polyethylene and conductive carbon black. A ratio of an elongation rate of the separator to an elongation rate of the positive electrode current collector is 171.

### Embodiment 47

A preparation method herein is the same as the method of Embodiment 1, with a difference only in that the positive electrode current collector is a porous aluminum foil. A ratio of an elongation rate of the separator to an elongation rate of the positive electrode current collector is 170.

### Embodiment 48

A preparation method herein is the same as the method of Embodiment 1, with a difference only in that the negative electrode current collector is a copper foil with a conductive carbon coating. A ratio of an elongation rate of the separator to an elongation rate of the negative electrode current collector is 162.

### Embodiment 49

A preparation method herein is the same as the method of Embodiment 1, with a difference only in that the negative electrode current collector is a copper foil with a nano lithium iron phosphate coating. A ratio of an elongation rate of the separator to an elongation rate of the negative electrode current collector is 140.

### Embodiment 50

A preparation method herein is the same as the method of Embodiment 1, with a difference only in that the negative electrode current collector is a copper foil with a poly-1-butylpyrrole coating. A ratio of an elongation rate of the separator to an elongation rate of the negative electrode current collector is 160.

### Comparative Example 3

A preparation method herein is the same as the method of Embodiment 1, with a difference only in that the positive electrode current collector is an aluminum foil with an elongation rate of 4% and the negative electrode current collector is a copper foil with an elongation rate of 4%. A ratio of an elongation rate of the separator to the elongation rate of the positive electrode current collector is 45, and a ratio of the elongation rate of the separator to the elongation rate of the negative electrode current collector is 45.

### Comparative Example 4

A preparation method herein is the same as the method of Embodiment 1, with a difference only in that the positive electrode current collector is an aluminum foil with an elongation rate of 8% and the negative electrode current collector is a copper foil with an elongation rate of 4%. A ratio of an elongation rate of the separator to the elongation rate of the positive electrode current collector is 22.5, and a ratio of the elongation rate of the separator to the elongation rate of the negative electrode current collector is 45.

### Comparative Example 5

A preparation method herein is the same as the method of Embodiment 1, with a difference only in that the positive electrode current collector is an aluminum foil with an elongation rate of 12% and the negative electrode current collector is a copper foil with an elongation rate of 4%. A ratio of an elongation rate of the separator to the elongation rate of the positive electrode current collector is 15, and a ratio of the elongation rate of the separator to the elongation rate of the negative electrode current collector is 45.

**Table 4: Test results of Embodiments 40 to 50 and Comparative Examples 3 to 5**

| Sequence number | MD elongation rate of the separator (%) | Thickness of the active material layer (µm) | Ratio of the elongation rate of the separator to the thickness of the active material layer (%/µm) | Ratio of the elongation rate of the separator to the elongation rate of the current collector | Nail piercing pass rate | Energy density (Wh/l) | Fast charging capacity: SOC in 30 min |
|---|---|---|---|---|---|---|---|
| Embodiment 40 | 180 | Positive electrode: 38 | Positive electrode: 4.7 | Positive electrode: 120 | 5/5 Pass | 680 | 81.5% |
| | | Negative electrode: 50 | Negative electrode: 3.6 | Negative electrode: 90 | | | |
| Embodiment 41 | 180 | Positive electrode: 38 | Positive electrode: 4.7 | Positive electrode: 140 | 5/5 Pass | 680 | 80.2% |
| | | Negative electrode: 50 | Negative electrode: 3.6 | Negative electrode: 90 | | | |
| Embodiment 42 | 180 | Positive electrode: 38 | Positive electrode: 4.7 | Positive electrode: 150 | 5/5 Pass | 680 | 80.1% |
| | | Negative electrode: 50 | Negative electrode: 3.6 | Negative electrode: 90 | | | |
| Embodiment 43 | 180 | Positive electrode: 38 | Positive electrode: 4.7 | Positive electrode: 160 | 5/5 Pass | 680 | 80.0% |
| | | Negative electrode: 50 | Negative electrode: 3.6 | Negative electrode: 90 | | | |
| Embodiment 44 | 180 | Positive electrode: 38 | Positive electrode: 4.7 | Positive electrode: 160 | 5/5 Pass | 680 | 80.2% |
| | | Negative electrode: 50 | Negative electrode: 3.6 | Negative electrode: 90 | | | |
| Embodiment 45 | 180 | Positive electrode: 38 | Positive electrode: 4.7 | Positive electrode: 170 | 5/5 Pass | 680 | 80.1% |
| | | Negative electrode: 50 | Negative electrode: 3.6 | Negative electrode: 90 | | | |
| Embodiment 46 | 180 | Positive electrode: 38 | Positive electrode: 4.7 | Positive electrode: 171 | 5/5 Pass | 680 | 80.0% |
| | | Negative electrode: 50 | Negative electrode: 3.6 | Negative electrode: 90 | | | |
| Embodiment 47 | 180 | Positive electrode: 38 | Positive electrode: 4.7 | Positive electrode: 170 | 5/5 Pass | 680 | 80.4% |
| | | Negative electrode: 50 | Negative electrode: 3.6 | Negative electrode: 90 | | | |
| Embodiment 48 | 180 | Positive electrode: 38 | Positive electrode: 4.7 | Positive electrode: 90 | 5/5 Pass | 680 | 80.1% |
| | | Negative electrode: 50 | Negative electrode: 3.6 | Negative electrode: 162 | | | |
| Embodiment 49 | 180 | Positive electrode: 38 | Positive electrode: 4.7 | Positive electrode: 90 | 5/5 Pass | 680 | 80.0% |
| | | Negative electrode: 50 | Negative electrode: 3.6 | Negative electrode: 140 | | | |
| Embodiment 50 | 180 | Positive electrode: 38 | Positive electrode: 4.7 | Positive electrode: 90 | 5/5 Pass | 680 | 80.2% |
| | | Negative electrode: 50 | Negative electrode: 3.6 | Negative electrode: 160 | | | |
| Comparative Example 3 | 180 | Positive electrode: 38 | Positive electrode: 4.7 | Positive electrode: 45 | 0/5 Pass | 680 | 80.3% |
| | | Negative electrode: 50 | Negative electrode: 3.6 | Negative electrode: 45 | | | |
| Comparative Example 4 | 180 | Positive electrode: 38 | Positive electrode: 4.7 | Positive electrode: 22.5 | 0/5 Pass | 680 | 80.1% |
| | | Negative electrode: 50 | Negative electrode: 3.6 | Negative electrode: 45 | | | |
| Comparative Example 5 | 180 | Positive electrode: 38 | Positive electrode: 4.7 | Positive electrode: 15 | 0/5 Pass | 680 | 80.2% |
| | | Negative electrode: 50 | Negative electrode: 3.6 | Negative electrode: 45 | | | |

It can be learned from the test data that, the battery of each of Embodiments 40 to 50 gets a high pass rate in the battery nail piercing test because a separator with a high elongation rate is selected, and the ratio of the elongation rate of the separator to the thickness of the active material layer and the ratio of the elongation rate of the separator to the elongation rate of the current collector are within the range of this embodiment of this application. In Comparative Examples 3 to 5, although the elongation rate of the selected separator and the ratio of the elongation rate of the separator to the thickness of the active material layer are the same as those of Embodiments 40 to 50, the ratio of the elongation rate of the separator to the elongation rate of the current collector is less than 60, which does not meet the design requirements of this embodiment of this application. Therefore, the battery fails the nail piercing test.

Performance test methods for the battery electrode plates and the secondary battery in the foregoing embodiments and comparative examples of this application are as follows:
1. Thickness test of an active material layer: Five points were randomly selected in each of left, middle, and right areas on an active material membrane, and then a micrometer caliper was used to measure a thickness. An average value of the thicknesses was taken as a thickness of the active material layer
2. Elongation rate test: Sample strips with a width of 15 mm and a length of 100 mm were prepared in MD and TD directions of a sample. Each sample strip was held by upper and lower ends of a tensile machine for testing with a stretching speed of 50 mm/min and a spacing of 40 mm. An initial length L0 of the sample strip and a final elongated length L when the sample strip is pulled off were recorded; and according to (L-L0)/L0*100%, MD and TD elongation rates of the sample strip were calculated.
3. Energy density test: The battery was placed in a 25°C thermostat; stood for 30 minutes; was charged at a constant current of 0.5 C to a voltage of 4.45 V, then charged at a constant voltage of 4.45 V to a current of 0.025 C, and discharged at a current of 0.5 C to a voltage of 3.0 V; and discharge energy was recorded. Energy density=discharge energy/(battery length*battery width*battery thickness).
4. Fast charging test: The battery was placed in a 25°C thermostat; stood for 30 minutes; was charged at a constant current of 2.0 C to a voltage of 4.25 V, then charged at a constant current of 1.5 C to 4.45 V, and then charged at a constant voltage of 4.45 V to a current of 0.025 C; and SOC was recorded after charging for 30 min.
5. Nail piercing test: The battery was placed in a 25°C thermostat; stood for 30 minutes; was discharged at a current of 0.7 C to a voltage of 3.0 V; was set aside for 5 minutes; then was charged at a constant current of 0.7 C to a voltage of 4.45 V; and then was charged at a constant voltage of 4.45 V to a current of 0.025 C. Then, the battery was placed in a 25°C explosion-proof box. A steel nail was used to pierce a central part of the cell at a speed of 150 mm/s until the nail penetrated through the cell, and the nail was kept still for 10 min and then taken out. A test pass rate was recorded.

It is shown with reference to the test results of Embodiments 1 to 50, Comparative Examples 1 to 3, and Tables 1 to 4 that, on a premise that an energy density (>600 Wh/1) and a fast charging capability (80% SOC in 30 min) of the battery are ensured, when the ratio of the elongation rate of the separator to the thickness of the active material layer is 3.0%/µm to 8.0%/µm, and the ratio of the elongation rate of the separator to the elongation rate of the current collector is greater than or equal to 60, a nail piercing pass rate of the battery can be effectively increased and battery safety is improved.

## Claims

1. A secondary battery, comprising at least one battery cell assembly, wherein the battery cell assembly comprises a positive electrode plate, a negative electrode plate, and a separator disposed between the positive electrode plate and the negative electrode plate, and the positive electrode plate and the negative electrode plate each comprise a current collector and an active material layer disposed on the current collector; and
an elongation rate of the separator is greater than 100%, the elongation rate of the separator comprises an elongation rate in a length direction and/or an elongation rate in a width direction, a ratio of the elongation rate of the separator to a thickness of the active material layer of the positive electrode plate and/or negative electrode plate is 3.0%/µm to 8.0%/µm, and a ratio of the elongation rate of the separator to an elongation rate of the current collector of the positive electrode plate and/or negative electrode plate is greater than or equal to 60.

2. The secondary battery according to claim 1, when the secondary battery comprises a plurality of stacked battery cell assemblies, at least an elongation rate of a separator in an outermost battery cell assembly in the secondary battery is greater than 100%, a ratio of the elongation rate of the separator to a thickness of an active material layer of the positive electrode plate and/or negative electrode plate is 3.0%/µm to 8.0%/µm, and a ratio of the elongation rate of the separator to an elongation rate of a current collector of the positive electrode plate and/or negative electrode plate is greater than or equal to 60.

3. The secondary battery according to claim 2, wherein an elongation rate of a separator in each of the at least one battery cell assemblies is greater than 100%, the ratio of the elongation rate of the separator to the thickness of the active material layer of the positive electrode plate and/or negative electrode plate is 3.0%/µm to 8.0%/µm, and the ratio of the elongation rate of the separator to the elongation rate of the current collector of the positive electrode plate and/or the negative electrode plate is greater than or equal to 60.

4. The secondary battery according to any one of claims 1 to 3, wherein the ratio of the elongation rate of the separator to the thickness of the active material layer is 4.0%/µm to 6.0%/µm.

5. The secondary battery according to any one of claims 1 to 4, wherein the ratio of the elongation rate of the separator to the elongation rate of the current collector is greater than or equal to 70.

6. The secondary battery according to claim 5, wherein the ratio of the elongation rate of the separator to the elongation rate of the current collector is greater than or equal to 90.

7. The secondary battery according to any one of claims 1 to 6, wherein the elongation rate of the separator is greater than or equal to 120%.

8. The secondary battery according to claim 7, wherein the elongation rate of the separator is greater than or equal to 150%.

9. The secondary battery according to any one of claims 1 to 8, wherein separator is made of one or more of the following: polyethylene, polyalphaolefin, polypropylene, polyethylene terephthalate, polymethylpentene, polybutylene, polyimide, polyamide, polyester, polyurethane, polycarbonate, cyclic olefin copolymer, polybenzimidazole, polybenzoxazole, aramid, polyvinylidene fluoride, polytetrafluoroethylene, poly(vinylidene fluoride-hexafluoropropylene), polyetherimide, polyvinyl alcohol, or a copolymer, a blend, a mixture, or a combination of the above-listed polymers.

10. The secondary battery according to any one of claims 1 to 9, wherein a thickness of the separator is 1 µm to 12 µm.

11. The secondary battery according to any one of claims 1 to 10, wherein the active material layer comprises an active material, and a binder and a conductive agent that are distributed in the active material.

12. The secondary battery according to any one of claims 1 to 11, wherein the current collector comprises a metal foil or a metal foil with a functional coating on a surface.

13. The secondary battery according to claim 12, wherein the functional coating comprises functional materials; and the functional materials comprise one or more of lithium iron phosphate, lithium manganese iron phosphate, lithium vanadyl phosphate, lithium-rich manganese-based material, artificial graphite, natural graphite, hard carbon, soft carbon, carbonaceous mesophase spherule, carbon nanotube, graphene, carbon fiber, vapor-grown carbon fiber, activated carbon, porous carbon, acetylene black, Ketjen black, conductive ink, thermally expanded microsphere, polyethylene, polyamide, polybutadiene, ethylene-ethyl acrylate, ethylene-vinyl acetate copolymer, fluorinated ethylene-propylene copolymer, polyethylene terephthalate, polypyrrole and its derivatives, polyvinylidene fluoride, polytetrafluoroethylene, polyamide, sodium carboxymethyl cellulose, styrene-butadiene rubber, aluminum oxide, silicon oxide, zirconium oxide, aluminium hydroxide oxide, hexagonal boron nitride, MXene, perovskite, lithium aluminum titanium phosphate, lithium lanthanum titanium oxide, lithium lanthanum zirconium oxide, or a composite, a blend, or a combination of the above-listed materials.

14. The secondary battery according to any one of claims 1 to 13, wherein the elongation rate of the current collector is less than 3%.

15. The secondary battery according to any one of claims 1 to 14, wherein the thickness of the active material layer is greater than or equal to 35 µm.

16. The secondary battery according to any one of claims 1 to 15, wherein the secondary battery comprises a lithium secondary battery, a potassium secondary battery, a sodium secondary battery, a zinc secondary battery, a magnesium secondary battery, or an aluminum secondary battery.

17. The secondary battery according to any one of claims 1 to 16, wherein a structure of the secondary battery comprises one or more of a winding structure or a stacked structure.

18. The secondary battery according to any one of claims 1 to 17, wherein the secondary battery further comprises a packaging shell, and the one or more battery cell assemblies are packaged in the packaging shell.

19. A terminal, wherein the terminal comprises a housing, and an electronic component and a battery that are accommodated in the housing, the battery comprises the secondary battery according to any one of claims 1 to 18, and the battery supplies power to the electronic component.
